# EUROPEAN PATENT SPECIFICATION

(11) **EP 4 558 595 B1**
(45) Date of publication and mention of the grant of the patent: **09.09.2026**
(21) Application number: 23757191.4
(22) Date of filing: 12.07.2023
(51) Int. Cl.: C11C 3/00, C12P 7/649

(54) **MIXED ALKOXIDE CATALYST FOR BIODIESEL PRODUCTION**
MISCHALKOXIDKATALYSATOR ZUR BIODIESELHERSTELLUNG
CATALYSEUR MIXTE D'ALCOXYDES POUR LA PRODUCTION DE BIODIÉSEL

(30) Priority: 21.07.2022 EP 22186204
(43) Date of publication of application: 28.05.2025
(73) Proprietor: BASF SE, 67056 Ludwigshafen am Rhein (DE)
(72) Inventor: HILDEBRANDT, Sven, 45481 Muehlheim an der Ruhr (DE); WEIGUNY, Sabine, 67056 Ludwigshafen am Rhein (DE); FRIEDRICH, Holger, 67056 Ludwigshafen am Rhein (DE); GANGLI, Sajan Kumar, 67056 Ludwigshafen am Rhein (DE); AHLF, Maraike, 67056 Ludwigshafen am Rhein (DE); BRAEUER, Judith, 67056 Ludwigshafen am Rhein (DE); MARX, Maximilian, 67056 Ludwigshafen am Rhein (DE)
(74) Representative: BASF IP Association
(86) International application number: PCT/EP2023/069264
(87) International publication number: WO 2024/017722

(56) References cited:
- US-A1- 2006 094 890
- US-A1- 2011 124 895
- US-A1- 2012 066 965
- US-A1- 2014 109 466
- ABELNIECE Z ET AL: "Biodiesel production by interesterification of rapeseed oil with methyl formate in presence of potassium alkoxides", BIOMASS CONVERSION AND BIOREFINERY, SPRINGER BERLIN HEIDELBERG, BERLIN/HEIDELBERG, vol. 12, no. 7, 14 July 2020 (2020-07-14), pages 2881 - 2889, XP037893066, ISSN: 2190-6815, [retrieved on 20200714], DOI: 10.1007/S13399-020-00874-Z

## Description

The present invention relates to a process for producing fatty acid C₁-C₄-alkyl esters from an organic oil source containing a triglyceride and a free fatty acid in the presence of a mixture of metal alkoxides as catalyst. Further, the invention relates to the use of said mixture as a transesterification catalyst for increasing the conversion in the process of producing fatty acid C₁-C₄-alkyl asters from an organic oil source, and to a process for producing a biofuel, preferably a biodiesel, comprising the above process.

### Background of the invention

Fatty acid esters of monovalent alkyl alcohols are used in manifold applications both as raw material and as intermediate products in the chemical and pharmaceutical industries, in the food-processing industry and in the fuel industry.

Biodiesel, neat or as a blending component, serves as a renewable alternative to fossil fuels in the transport sector, helping to reduce greenhouse gas emissions. Biodiesel may be made from various bio-generated oils and fats of vegetable and animal origin. The most frequently used oils come from rapeseed, canola, soybean, oil palm or sunflower, but also recycled grease or animal fat may be used as feedstock.

Biodiesel is mainly produced from vegetable oils or fats by transesterification of triglycerides in the oils or fats with an excess of lower alcohol in the presence of an alkaline catalyst to produce fatty acid alkyl esters (FAAE), mainly fatty acid methyl esters (FAME), useful as biodiesel and glycerol as co-product. The fatty acid alkyl esters and glycerol are separated, for example, by phase separation, and the lighter phase containing crude biodiesel is purified from alcohol and catalyst.

Mainly, two-step process modifications for the transesterification step in the biodiesel production are known.

WO 91/05034 A1 discloses a continuous two-step process for preparing methyl esters by reacting a fatty acid triglyceride with a fatty acid content of < 1 wt%, especially from a de-acidified rapeseed oil at a temperature of 75°C and a pressure of 3 bar in the presence of sodium methoxide (NaOMe). The reaction was carried out in a tubular reactor with a flow having a Reynolds' number of 2700. After two steps a conversion of 98% is described.

US 5,354,878 A discloses a continuous multistage process of a catalytic transesterification, including *inter alia* a step of introducing a mixture of oil, alcohol and alkaline catalyst at the top of a reactor column at a rate of flow which is lower than the sinking rate of glycerol, a step of further reaction in a stirring reactor, a washing step with hot extraction solution and a drying step. This process is also known as CD process (catalytic distillation).

WO 2008/034485 A1 discloses a continuous multistage process of a catalytic transesterification, wherein the yield of fatty acid methyl ester may be increased by transferring crude fatty acid methyl ester after acid water washing to a further separator, wherein the fatty acid methyl ester phase is dried and the remaining aqueous phase comprising additional fatty acid methyl ester is mixed with formerly withdrawn heavy phases and subjected to a further separation stage resulting in a phase containing fatty acid methyl ester and a phase containing glycerol and methanol, which phase is separated in a rectifying column into crude glycerol and methanol which may be fed into the methanol supply. An increase in yield of up to 2% is described.

Overall yields of biodiesel from fats and oils should be high. Increased yield is a very important criterion as feedstock costs are one relevant part of the total cost of production. Thus, also waste feedstocks, like recycled grease or animal fats, which generally contains free fatty acids (FFA) in various amounts, may be a possible feedstock.

However, the presence of free fatty acids generally causes disadvantages at the stages of transesterification or separation. Therefore, the FFA-containing oil or fat is usually pretreated in an additional step to reduce the FFA content to a minimum.

For example, EP 1889899 A1 discloses a process for producing biodiesel starting from a high free fatty acid feedstock by converting said feedstock to glycerides, wherein the free fatty acid content may be reduced to 0.5 wt%, followed by reacting said glycerides to fatty acid methyl esters and glycerol using KOH and methanol.

Further, the properties of the catalyst, for example, kind, formulation or concentration, usually affects the biodiesel yield and oil/fat conversion. The most frequently used alkaline catalysts are NaOH, KOH, NaOMe or KOMe. However, utilizing an alkaline catalyst may require a higher amount or may lead to undesired soap formation, for example, when free fatty acids are present in the oil or fat or OH-containing catalysts are used.

WO 2008/115806 A1 discloses a process for the transesterification of a glyceride with an alcohol in the presence of a base catalyst comprising a basic metal salt of glycerol. The glycerol salt may be used as catalyst or may be further reacted with a lower alcohol to provide a basic metal oxide, which may be used as a mixture containing the basic metal alkoxide and glycerol.

US 2012/0066965 A1 discloses a process for the transesterification of a glyceride with an alcohol in the presence of a multicomponent catalyst comprising a catalyst and an activator, for example a solution comprising NaOMe as a catalyst and KOMe as an activator. It is described that the phase separation for algae oil after stirring with a mixture with a molar ratio of NaOMe : KOMe of 92:8 and 89:11 may be faster compared to a NaOMe solution.

A. Singh et al., Applied Engineering in Agriculture, 22(4), 2006, 597-600, describe that methoxide catalysts lead to better biodiesel yield than hydroxide catalysts, and KOMe performs better than NaOMe. Methoxide catalysts not only accelerate the reaction but also elevated the conversion equilibrium. K-based catalysts result in higher soap formation than the corresponding Na-based catalysts, wherein NaOMe performs better than NaOH. Based on statistically optimized operation conditions, biodiesel derived from canola oil with an acid value of 1.97 mg KOH/g may be obtained with a yield of 95.8% and a soap formation of 0.75 wt%, using KOMe as catalyst at 0.2 mol/mol (1.59 wt%), 50°C, 240 rpm for 10 min and at a molar ratio of methanol : oil of 4.5:1.

G. Vicente et al., Bioresource Technology 92, 2004, 297-305, describe that biodiesel derived from sunflower oil with an acid value of 0.45 mg KOH/g may be obtained under effective stirring for 4 hours with a yield of about 98-99%, using 1 wt% of NaOMe or KOMe, resp., at 65°C and a molar ratio of methanol : oil of 6:1.

US 2006/094890 A1 describes a process for the production of biodiesel from non-edible oil sources comprising free fatty acids, which process comprises comprises mixing a feedstock with an alcohol and an acidic catalyst in the presence of a water scavenger or water adsorbent for effective esterification of free fatty acid to fatty acid ester, wherein the fatty acid ester is obtained as a mixture of fatty acid ester and triglycerides, adding an alcohol and a basic catalyst into the resultant mixture to trans-esterify the triglycerides to fatty acid ester, wherein the fatty acid ester thus produced is capable of being used as biodiesel.

Therefore, an important factor may also be the kinetic aspect of the reaction. Using efficient stirring for a longer time K- and Na-based catalysts perform usually equally fast. However, biodiesel production is often performed on an industrial scale, where the mixing of the reactants usually determines the reaction rate instead of the efficiency of the catalyst.

While biodiesel provides many benefits, biodiesel production must be economical in order to maintain supply of the advanced biofuel. Producers must adapt to changing market conditions with new processes for converting low-cost feedstocks while meeting stringent product quality specifications.

Thus, there is still a need for an effective catalytic system for the transesterification of any kind of organic oil or fat in order to produce biodiesel.

Therefore, it is an object of the present invention to provide a process for producing biodiesel using an effective catalytic system, especially in an economic way, whereby the transesterification step should be as complete as possible.

Further, it is an object to provide an effective catalytic system suitable for use in the transesterification step of producing biodiesel.

### Summary of the invention

It has now been found that a mixture of alkali metal alkoxides can improve the conversion rate of an organic oil or fat source in the production process of biodiesel, especially of low-cost feedstocks.

Accordingly, in a first aspect, the invention relates to a process for producing fatty acid C₁-C₄-alkyl esters from an organic oil source, wherein the oil source contains a triglyceride and a free fatty acid in an amount of at least 0.2 wt% wt%, based on the total weight of the organic oil source, the process comprising
a) reacting the organic oil source with a C₁-C₄-alkanol in the presence of an alkaline catalyst to form an ester phase and a glycerol phase; and
b) isolating the fatty acid C₁-C₄-alkyl esters from the ester phase;

wherein the alkaline catalyst is a mixture of metal alkoxides,and
the mixture of metal alkoxides is a mixture of alkali metal alkoxides.

In a further aspect, the invention relates to the use of a mixture of metal alkoxides, as defined in any aspect herein, as a transesterification catalyst for increasing the conversion in the process of producing fatty acid C₁-C₄-alkyl esters from an organic oil source, wherein said organic oil source contains a triglyceride and a free fatty acid in an amount of at least 0.2%, based on the total weight of the organic oil source, preferably in the process of producing a biofuel, especially biodiesel.

In a further aspect, the invention relates to a process for producing a biofuel, preferably biodiesel, comprising the above process for producing fatty acid C₁-C₄-alkyl esters.

### Detailed description of the invention

As used herein, the indefinite article "a" comprises the singular but also the plural, i.e., an indefinite article in respect to a component of a composition means that the component is a single compound or a plurality of compounds. If not stated otherwise, the indefinite article "a" and the expression "at least one" are used synonymously.

In step a) a transesterification is carried out with a C₁-C₄-alkanol to yield fatty acid alkyl esters.

Transesterifications of fatty acid glycerides to yield lower alkyl glycerides are well known in the art. Typically, the transesterification is carried out in the presence of an alkaline catalyst.

The alcohol used in the instant process is usually dependent on the type of fatty acid alkyl esters that are to be prepared. Suitable examples of a C₁-C₄-alkanol include methanol, ethanol, n-propanol, 2-propanol, n-butanol, 2-butanol and t-butanol. It is also possible to use a mixture of two or more alcohols.

Preferably, methanol or ethanol or a mixture thereof is used. More preferably, methanol or ethanol is used. Especially, methanol is used.

Accordingly, in a preferred aspect, the invention relates to a process for producing fatty acid C₁-C₄-alkyl esters from an organic oil source, wherein the C₁-C₄-alkanol is methanol, ethanol or a mixture thereof, preferably methanol.

It is of advantage that the C₁-C₄-alkanol is used in its anhydrous form.

The alkaline catalyst used in the instant process is a mixture of alkali metal alkoxides, for example, a mixture of NaOMe and KOMe or a mixture of NaOEt and KOEt. Preferably, the mixture of alkali metal alkoxides is a mixture of NaOMe and KOMe.

Accordingly, in a preferred aspect, the invention relates to a process for producing fatty acid C₁-C₄-alkyl esters from an organic oil source, wherein the mixture of alkali metal alkoxides is a mixture of NaOMe and KOMe.

The molar ratio of NaOMe to KOMe may be varied in a wide range. The molar amount of NaOMe is at least 1 mol%, based on 1 mol of the mixture of NaOMe and KOMe, preferably at least 5 mol%, more preferably at least 20 mol%.

Preferably, the molar ratio of NaOMe : KOMe in the mixture of alkali metal alkoxides is of from 0.01 : 0.99 to 0.99 : 0.01, especially 0.05 : 0.95 to 0.95 : 0.05. A further preferred range is 0.10 : 0.90 to 0.90 : 0.10, especially 0.20 : 0.80 to 0.80 : 0.20.

Accordingly, in a preferred aspect, the invention relates to a process for producing fatty acid C₁-C₄-alkyl esters from an organic oil source, wherein the molar ratio of NaOMe : KOMe in the mixture of alkali metal alkoxides is of from 0.01 : 0.99 to 0.99 : 0.01, preferably 0.05 : 0.95 to 0.95 : 0.05.

The alkaline catalyst may be added to the organic oil source as a solid but preferably as a solution in a suitable solvent, preferably in anhydrous C₁-C₄-alkanol, preferably in methanol, ethanol or a mixture thereof. The alkaline catalyst is preferably obtained by mixing a solution of NaOMe in C₁-C₄-alkanol and a solution of KOMe in C₁-C₄-alkanol. Each of the solution has generally a concentration of 1 to 50 wt%, based on the total weight of the solution.

More preferably, the alkaline catalyst is especially applied as a solution in methanol, preferably anhydrous methanol.

Accordingly, in a preferred aspect, the invention relates to a process for producing fatty acid C₁-C₄-alkyl esters from an organic oil source, wherein the alkaline catalyst is used as a solution in C₁-C₄-alkanol, preferably methanol, ethanol or a mixture thereof, especially methanol.

The solution of the alkaline catalyst in C₁-C₄-alkanol, preferably methanol, may contain the alkaline catalyst in an amount of from 1 to 50 wt%, based on the total weight of the solution in C₁-C₄-alkanol, preferably from 2 to 50 wt%. The alcohol quantity introduced in this manner is included in the total amount of C₁-C₄-alkanol used in step a).

The fatty acid C₁-C₄-alkyl esters produced by the instant process are preferably fatty acid methyl esters (FAME) or fatty acid ethyl esters (FAEA) or a mixture thereof, dependent on the kind and number of alcohol(s) used. More preferably fatty acid methyl esters are produced by the instant process.

Accordingly, in a further preferred aspect, the invention relates to a process for producing fatty acid C₁-C₄-alkyl esters from an organic oil source, wherein the alkaline catalyst is used as a solution in C₁-C₄-alkanol having a concentration of from 1 to 50 wt%, based on the total weight of the solution, preferably as a solution in methanol, more preferably as a solution in anhydrous methanol.

Preferably, the alkaline catalyst is used as a solution in C₁-C₄-alkanol having a concentration of from 1 to 50 wt%, based on the total weight of the solution methanol, preferably anhydrous methanol, having a concentration of from 1 to 50 wt%, based on the total weight of the solution, preferably from 2 to 50 wt%.

Especially, the invention relates to a process for producing fatty acid C₁-C₄-alkyl esters from an organic oil source, wherein the fatty acid C₁-C₄-alkyl esters are fatty acid methyl esters (FAME) and the alkaline catalyst is used as a solution in methanol, preferably anhydrous methanol, having a concentration of from 1 to 50 wt%, preferably 2 to 50 wt%.

The amount of the alkaline catalyst may generally range from 0.1 to 8 wt%, based on the total weight of the triglyceride or organic oil source, preferably based on the total weight of the triglyceride. More preferably, the amount of the alkaline catalyst ranges from 0.1 to 6 wt%, especially 0.1 to 5 wt%, based on the total weight of the triglyceride, in particular from 0.1 to 4 wt%.

Usually, the higher the amount of a free fatty acid the higher the amount of the alkaline catalyst, as the alkaline catalyst is partly used for neutralizing the free fatty acid. Therefore, the amount of the active alkaline catalyst may be lower than 8 wt%, based on the total weight of the triglyceride or organic oil source. The term "amount of the active alkaline catalyst", as used herein, means the amount required for catalyzing the process of producing fatty acid C₁-C₄-alkyl esters from an organic oil source, excluding the amount required for neutralizing the content of a free fatty acid.

Accordingly, in a further preferred aspect, the invention relates to a process for producing fatty acid C₁-C₄-alkyl esters from an organic oil source, wherein the alkaline catalyst is used in an amount of from 0.1 to 8 wt%, based on the total weight of the triglyceride, preferably 0.1 to 6 wt%, especially 0.1 to 5 wt%.

Especially preferred is a process for producing fatty acid C₁-C₄-alkyl esters from an organic oil source, wherein the active alkaline catalyst is used in an amount of from 0.1 to 5 wt%, based on the total weight of the triglyceride, preferably from 0.1 to 3 wt%.

The C₁-C₄-alkanol, present in step a), may be used in equimolar amount needed for the transesterification of the triglyceride contained in the organic oil source, but may be preferably used in excess to the triglyceride contained in the organic oil source. The amount of the C₁-C₄-alkanol may be at least 3 mol, based on 1 mol of the triglyceride of the organic oil source, up to about 20 mol. Preferably, the amount of the C₁-C₄-alkanol may be at least 4 mol to 15 mol, based on 1 mol of the triglyceride of the organic oil source.

Accordingly, in a further preferred aspect, the invention relates to a process for producing fatty acid C₁-C₄-alkyl esters from an organic oil source, wherein the molar ratio of C₁-C₄-alkanol to the triglyceride of the organic oil source is of from 3 : 1 to 20 : 1, preferably 4 : 1 to 15 : 1.

The total amount of the C₁-C₄-alkanol, used in step a), generally includes the amount of the C₁-C₄-alkanol used as a solvent of the alkaline catalyst.

Especially, the molar ratio of methanol to the triglyceride of the organic oil source is of from 3 : 1 to 20 : 1, preferably 4 : 1 to 15 : 1.

The starting material in the process for producing fatty acid alkyl esters may be any triglyceride-containing feedstock of any origin, usually an organic oil source. Organic oil is produced in contrast to mineral oil by plants, animals and other organisms through natural metabolic processes and is triglyceride-based. The term "organic oil source" is to be understood to include organic oil, like vegetable oil and animal oil, especially vegetable oil, but also any other mixture, by-product or fraction of organic oil that contains at least one free fatty acid (FFA) and is suitable to produce a biofuel, preferably biodiesel. The term "organic oil source" also includes fats, which are solid at room temperature, but liquid at the reaction temperature in step a) of the instant process.

Organic oil sources typically contain different types of free fatty acids in different amounts as well as fatty acids bound as triglycerides.

Organic oil sources include vegetable and animal oils and fats. Vegetable oils are generally obtained by extraction from seeds, by means of solvent or pressure, while animal fats are obtained by hot extraction in autoclaves or by means of solvent. Normally these fatty substances contain free fatty acids, sterols, phospholipids, water, odorous substances and other impurities. Refining of the fatty substances involves complete removal of nearly all the impurities including the free fatty acids so that they can be used in the production of biodiesel, in food and in industry in general.

Refined vegetable and animal oils and fats typically show a very low FFA content, usually less than 0.5 wt% or less than 0.1 wt%, based on the total weight of the refined vegetable and animal oils and fats. However, during use of these refined oils and fats the FFA content usually increases. Used or recycled oils typically contain various amounts of free fatty acid.

The instant process may be applied to any organic oil source having an amount of free fatty acid of at least 0.2 wt%, based on the total weight of the organic oil source, preferably at least 0.3 wt%, more preferably at least 0.4 wt%, most preferably at least 0.5 wt% especially at least 0.6 wt%, 0.7 wt% or 0.8 wt%. The instant process may be applied to any organic oil source having an amount of free fatty acid of at most 12 wt%, based on the total weight of the organic oil source, preferably at most 10 wt%, more preferably at most 9 wt%, especially at most 8 wt%.

Accordingly, in a further preferred aspect, the invention relates to a process for producing fatty acid C₁-C₄-alkyl esters from an organic oil source, wherein the amount of the free fatty acid is at least 0.2 wt%, based on the total weight of the organic oil source, preferably at least 0.3 wt%, more preferably of from 0.3 to 10 wt% or 0.5 to 10 wt%, in particular from 0.3 to 9 wt% or 0.5 to 8 wt% or 0.5 to 7 wt%.

A further preferred range of the amount of the free fatty acid is of from 0.7 to 10 wt%, based on the total weight of the organic oil source, preferably of from 0.7 to 9 wt%, more preferably from 0.7 to 8 wt%.

The organic oil source may be a natural or synthetic oil and/or fat, preferably derived from a vegetable oil.

The term "synthetic oil and/or fat", as used herein, includes any oil or fat, derived from an organic oil source, wherein a triglyceride is obtained by subjecting a free fatty acid, present in the organic oil source, preferably in a considerable amount, to a reaction with glycerol, or by subjecting a mono- or diglyceride, present in the organic oil source, preferably in a considerably amount, to a reaction with a fatty acid, present in the organic oil source.

Thus, the synthetic oil and fat may contain used vegetable and/or animal oil and/or fat or a refined vegetable and/or animal oil and/or fat.

Accordingly, in a further preferred aspect, the invention relates to a process for producing fatty acid C₁-C₄-alkyl esters from an organic oil source, wherein the organic oil source is from a natural or synthetic oil and/or fat, preferably derived from a vegetable oil.

The organic oil source may be any refined vegetable and/or animal oil and/or fat or any used vegetable and/or animal oil and/or fat.

The term "used vegetable and/or animal oil and/or fat", as used herein, means used cooking oil (UCO), also termed recycled oil, waste oil or yellow grease. The used cooking oil is recovered from businesses and industry that use the oil for cooking.

Preferably, the organic oil source contains used vegetable and/or animal oil and/or fat.

Other organic oil sources include by-products of the chemical and physical refining of vegetable and/or animal oil and/or fat, by-products of the refining of glycerol from biodiesel, fatty acids from distillation and non-distillation, hydrolytically cleaved fatty substances, trap grease and distilled and non-distilled fatty acids resulting from the cleaving of soaps.

Also mixtures of the above organic oil sources are encompassed and may be used in the instant process.

Accordingly, in a preferred aspect, the invention relates to a process for producing fatty acid C₁-C₄-alkyl esters from an organic oil source, wherein the oil organic source is from used vegetable and/or animal oil and/or fat, by-products of the chemical and physical refining of vegetable and/or animal oil and/or fat, by-products of the refining of glycerol from biodiesel, fatty acids from distillation and non-distillation, trap grease, hydrolytically cleaved fatty substances and distilled and non-distilled fatty acids resulting from the cleaving of soap or mixtures thereof.

Preferably, the organic oil source derives from a vegetable organic oil source.

Accordingly, in a preferred aspect, the invention relates to a process for producing fatty acid C₁-C₄-alkyl esters from an organic oil source, wherein organic oil source is from used vegetable oil or by-products of the chemical and physical refining of vegetable oil.

In a more preferred aspect, the invention relates to a process for producing fatty acid C₁-C₄-alkyl esters from an organic oil source, wherein the vegetable oil is an oil selected from coconut oil, corn oil, cottonseed oil, olive oil, palm oil, peanut oil, rapeseed oil, safflower oil, sesame oil, soybean oil, sunflower oil and any combination thereof.

Especially, the vegetable oil is an oil selected from coconut oil, palm oil, rapeseed oil, soybean oil and any combination thereof.

Also a preferred organic oil source is palm fatty acid distillate (PFAD) or palm sludge oil (PSO). PAFD is a lower-value by-product generated during the refining of palm oil in the fatty acid stripping and deodorization stages. PFAD is generally sold as a source of industrial fatty acids for non-food applications. Palm sludge oil (PSO) is an undistilled residue of palm oil production with inferior quality compared to PFAD.

The free fatty acid may be any fatty acid bound in the triglyceride of the organic oil source, for example in the form of the natural occurrence or in a structural isomer, obtained by the use of the refined oil or fat, for example trans fatty acids.

Preferably, the fatty acid is at least one free fatty acid selected from caprylic acid, capric acid, lauric acid, myristic acid, palmitic acid, stearic acid, arachidic acid, behenic acid, lignoceric acid, cerotic acid, myristoleic acid, palmitoleic acid, oleic acid, elaidic acid, vaccenic acid, linoleic acid, linolelaidic acid, linolenic acid, arachidonic acid, eicosapentaenoic acid, erucic acid and docosahexaenoic acid, preferably the free fatty acid is selected from oleic oil, palmitic acid, linoleic acid, lauric acid and any combination thereof.

Accordingly, in a preferred aspect, the invention relates to a process for producing fatty acid C₁-C₄-alkyl esters from an organic oil source, wherein the free fatty acid is at least one fatty acid selected from caprylic acid, capric acid, lauric acid, myristic acid, palmitic acid, stearic acid, arachidic acid, behenic acid, lignoceric acid, cerotic acid, myristoleic acid, palmitoleic acid, oleic acid, elaidic acid, vaccenic acid, linoleic acid, linolelaidic acid, linolenic acid, arachidonic acid, eicosapentaenoic acid, erucic acid and docosahexaenoic acid, preferably the free fatty acid is selected from oleic oil, palmitic acid, linoleic acid, lauric acid and any combination thereof.

Where the organic oil source is contaminated with gums, odorous or intractable matter or is dark in color, it may be appropriate to pretreat the organic oil source.

The organic oil source may be pretreated to remove impurities before the organic oil source is used in step a) of the process for producing fatty acid C₁-C₄-alkyl ester, for example in one or more steps. The pretreatment steps may be carried out by methods known in the art for producing biodiesel. The pretreatment steps may include at least one step of degumming, bleaching, removing insoluble impurities or drying. The steps applied are usually dependent on the kind of organic oil source. The steps may be conducted in any order.

The organic oil source may be subjected to a degumming step, usually to remove phosphatides, for example, using phosphoric acid and steam, preferably followed by centrifugal separation of the aqueous phase.

The organic oil source may also be subjected to a bleaching step, for example, using heat bleaching or clay bleaching.

The organic oil source may also be subjected to a drying step, for example, using heat and/or vacuum. The moisture content of the organic oil source may be usually reduced to an amount of from 0.05 wt% or less, based on the total weight of the organic oil source.

Further, the organic oil source may be purified from insoluble impurities, for example by filtering, for example applying a polishing filter.

Accordingly, in a preferred aspect, the invention relates to a process for producing fatty acid C₁-C₄-alkyl esters from an organic oil source, wherein the organic oil source is subjected prior to step a) to at least one step selected from degumming, bleaching, drying, filtering and any combination thereof.

Optionally, the process may include a step of removing the free fatty acid partially, preferably to an amount of at most 12 wt%, based on the total weight of the organic oil source, more preferably to an amount of at most 10 wt%, especially to an amount of at most 8 wt% or 7 wt%. The methods for removing the free fatty acid are known in the art. For example, this may be achieved by stripping or esterification with glycerol to the desired free fatty acid content.

Preferably, the organic oil source used in the instant process has already an amount of free fatty acid of from 0.2 to 12 wt%, based on the total weight of the organic oil source, preferably from 0.2 to 12 wt%, more preferably from 0.3 to 10 wt%, especially from 0.3 to 8 wt%, in particular 0.5 to 8 wt% or 0.5 to 7 wt%.

Step a) defines the step of reacting the organic oil source with a C₁-C₄-alkanol in the presence of an alkaline catalyst to form an ester phase and a glycerol phase.

The reaction step a) usually starts, when all three components are exposed to each other.

Step a) may be carried out in any vessel which is suitable for a transesterification reaction and a phase separation, for example, in a reactor or tank. The addition of the three components, the C₁-C₄-alkanol, the alkaline catalyst and the organic oil source, may be carried out in any known matter, which is suitable for a transesterification reaction.

The step a) preferably comprises the steps:
a1) adding the organic oil source, the C₁-C₄-alkanol and the alkaline catalyst to a vessel,
a2) mixing the organic oil source, the C₁-C₄-alkanol and the alkaline catalyst, and
a3) allowing the mixture, obtained in step a1) and step a2), to react.

Accordingly, in a preferred aspect, the invention relates to a process for producing fatty acid C₁-C₄-alkyl esters from an organic oil source, wherein step a) comprises the following steps:
a1) adding the organic oil source, the C₁-C₄-alkanol and the alkaline catalyst to a vessel,
a2) mixing the organic oil source, the C₁-C₄-alkanol and the alkaline catalyst, and
a3) allowing the mixture, obtained in step a1) and step a2), to react.

The steps a1) and a2) may be carried out simultaneously, partially simultaneously or in any order. Step a1) may be carried out before step a2), or step a2) may be carried out before step a1).

The term "mixing", as used herein for step a2), means bringing the three components in contact, to start the transesterification reaction. Mixing may be carried out by using any suitable device or by using gravitational force or thermal convection, for example, by simply filling the components to an upper part of the vessel, or by stirring.

Examples of a mixing device include a pump, a static mixer and a stirrer, preferably a pump.

The term "partially simultaneously", as used herein, means that two components are premixed and added to the third component, already charged in the vessel, preferably a mixture M2a, as defined herein-after.

The C₁-C₄-alkanol, the alkaline catalyst and the organic oil source may be added to the vessel in any order or in parallel, as separate components or as a mixture of any combination of the three components.

A mixture of two or all components of C₁-C₄-alkanol, the alkaline catalyst and the organic oil source may be obtained by any kind of bringing the components into contact, preferably by mixing.

A mixture M1 may comprise all three components, which are brought into contact, preferably premixed by any conventional mixing device, for example, in a pump, a static mixer or stirrer, and added to the vessel.

A mixture M2 may comprise the C₁-C₄-alkanol and the alkaline catalyst, wherein at least 10 wt% of the C₁-C₄-alkanol, based on the total weight of the C₁-C₄-alkanol used in step a), preferably at least 50 wt%, more preferably at least 90 wt%, especially at least 95 wt%, in particular the whole amount is present in the mixture M2 (= mixture M2a).

A mixture M3 may comprise the C₁-C₄-alkanol and the organic oil source, wherein ≤ 90 wt% of the C₁-C₄-alkanol, based on the total weight of the C₁-C₄-alkanol used in step a), preferably ≤ 50 wt%, especially ≤ 10 wt%, in particular ≤ 5 wt% are present in the mixture M3.

A mixture M2a and the organic oil source may be used, wherein the mixture M2a contains the whole amount of the C₁-C₄-alkanol.

The mixture M2a is preferably a solution of the alkaline catalyst in ethanol, methanol or a mixture thereof, more preferably a solution of the alkaline catalyst in methanol (mixture M2a').

Alternatively, a mixture M2 and a mixture M3 may be used, wherein each of the mixtures M2 and M3 contains a part of the amount of the C₁-C₄-alkanol (mixtures M2b and M3b). Preferably, the weight ratio of the C₁-C₄-alkanol in the mixture M2b to the C₁-C₄-alkanol in the mixture M3b is 0.01 : 0.99 to 0.99 : 0.01, preferably 0.1 : 0.9 to 0.9 : 0.1.

Preferably, a mixture M2a, which contains the whole amount of the C₁-C₄-alkanol, and the organic oil source may be used such, for example, by
i) adding the mixture M2a and the organic oil source separately to the vessel and mixing, preferably by initially charging the oil source in the vessel, adding the mixture M2a and mixing;
ii) by adding the mixture M2a and the organic oil source in a premixed form to the vessel;
iii) by adding the mixture M2a and the organic oil source separately and simultaneously; or
iv) by adding and mixing the mixture M2a and organic oil source simultaneously.

Further preferably, a mixture M2b and a mixture M3b, wherein each of the mixtures M2b and M3b contains a part of the amount of the C₁-C₄-alkanol, may be used such, for example, by
i) adding the mixtures M2b and M3b separately to the vessel and mixing, preferably by initially charging the mixture M3b in the vessel, adding the mixture M2b and mixing;
ii) by adding the mixtures M2b and M3b in a premixed form to the vessel;
iii) by adding the mixtures M2b and the M3b separately and simultaneously; or
iv) by adding and mixing the mixtures M2b and M3b simultaneously.

Step a3) may be carried out under mechanical agitation, like stirring, or with low or no agitation.

In a preferred embodiment, most of the reaction time of step a) of the instant process is preferably carried out with low or no agitation, preferably under essentially static reaction conditions. The organic oil source, the C₁-C₄-alkanol and the alkaline catalyst, preferably a mixture M2a or M2a' and the organic oil source or mixtures M2b and M3b are usually added in parallel, preferably with a flow rate such that all components, preferably the mixture M2a and the organic oil source or the mixtures M2b and M3b, are added completely within the same period of time.

The addition of the components may be carried out by any suitable metering unit. Especially, the mixtures M2a, M2b, M3b and the organic oil source are usually supplied by using a suitable metering unit, preferably using a pump.

The period of time for supplying the organic oil source, the C₁-C₄-alkanol and the alkaline catalyst, preferably the mixtures M2a and the organic oil source or the mixtures M2b and M3b, into the vessel is usually much less, than the period of time usually carried out under essentially static reaction conditions.

Thus, the reaction time of step a) includes the period of time of adding the organic oil source, the C₁-C₄-alkanol and the alkaline catalyst, preferably the mixture M2a and the organic oil source or the mixtures M2b and M3b, and the period of time of reacting until the reaction is complete and two separate phases occur.

The term "essentially static reaction conditions", as used herein, means that the mixture during step a) is allowed to react without input of mechanical energy, preferably at a predetermined reaction temperature and reaction pressure.

The mixing time of the three components may be very low, for example, ≤ 30 sec, preferably ≤ 20 sec, more preferably ≤ 10 sec, when the mixing of the components is carried out in a pump.

The essentially static reaction conditions correspond to conditions of mass transfer limitation. Conditions of mass transfer limitation occur when the diffusion rate of the reactants is lower than the reaction rate.

In case, step a3) is performed under essentially static reaction conditions, the conversion of the transesterification reaction in step a) is usually at most 40%, based on 100% conversion of the transesterification reaction, preferably at most 35%, more preferably at most 30%, especially at most 25% during the period of time of adding and mixing the organic oil source, the C₁-C₄-alkanol and the alkaline catalyst, preferably the mixture M2a and the organic oil source or the mixtures M2b and M3b.

Accordingly, in a preferred aspect, the invention relates to a process for producing fatty acid C₁-C₄-alkyl esters from an organic oil source, wherein a conversion of at least 60% is achieved in step a) under essentially static reaction conditions, based on 100% conversion.

The term "conversion", as used herein, means the percentage of the starting material (triglyceride) which has been converted into the expected product (fatty acid C₁-C₄-alkyl esters), based on 100% conversion of the starting material.

The term "100% conversion" as used herein, means the theoretical conversion of the starting materials.

Preferably, a conversion of at least 65% is achieved in step a) under essentially static reaction conditions, more preferably at least 70%, especially at least 75%.

Accordingly, in a preferred aspect, the invention relates to a process for producing fatty acid C₁-C₄-alkyl esters from an organic oil source, wherein step a3) comprises allowing the mixture, obtained in step a1) and step a2), to react under essentially static reaction conditions to form an ester phase and a glycerol phase.

The steps a1) and a2) may be carried out simultaneously, partially simultaneously or in any order. Preferably, the steps a1) and a2) are carried out partially simultaneously, wherein especially a mixture M2a and the organic oil source are added simultaneously to the vessel.

In another preferred embodiment, steps a2) and a3) are carried out under mechanical agitation, followed by forming the ester phase and the glycerol phase. Mechanical agitation may be carried out, for example, by stirring, wherein a conversion of at least 60%, based on 100% conversion may be achieved, preferably at least 80%, more preferably at least 90%, especially at least 95%, and step a3). Mechanical agitation may be carried out by stirring, using, for example a stirring speed of at least 300 rpm or higher, for example in the range of from 300 to 800 rpm, preferably 300 to 600 rpm. The phase separation into the ester phase and glycerol phase usually occurs by allowing the mixture to stand, for example, under static reaction conditions.

The period of time for mechanical agitation may be up to 50% of the period of time for the phase separation, preferably up to 40%. The period of time for mechanical agitation compared to the period of time for the phase separation is usually dependent on the process capacity, allowing a sufficient phase separation, and may also be less than 40%. lower.

Accordingly, in a preferred aspect, the invention relates to a process for producing fatty acid C₁-C₄-alkyl esters from an organic oil source, wherein steps a2) and a3) are carried out under mechanical agitation, followed by forming the ester phase and the glycerol phase.

Typically, the step a) of the instant process may be carried out at various conditions of temperature and pressure. Generally, the instant process is carried out at moderate conditions of temperature and pressure. Usually, the instant process may be carried out under air or inert conditions like nitrogen.

The pressure in bar, as used herein, means the pressure in bar absolute.

Step a) may be carried out at a temperature of from 20 to 100°C, preferably at a temperature of from 30 to 80°C. Preferably, the reactor is preheated to the desired temperature.

Step a) may be carried out at a pressure of from 1 to 10 bar, preferably from 1 to 5 bar, more preferably 1 to 3 bar.

Accordingly, in a preferred aspect, the invention relates to a process for producing fatty acid C₁-C₄-alkyl esters from an organic oil source, wherein step a) is carried out at a temperature of from 20 to 100°C, preferably from 30 to 80°C.

Accordingly, in a preferred aspect, the invention relates to a process for producing fatty acid C₁-C₄-alkyl esters from an organic oil source, wherein step a) is carried out at a pressure of from 1 to 10 bar, preferably 1 to 3 bar.

During the reaction of step a) a phase containing the fatty acid C₁-C₄-alkyl esters and a phase containing glycerol are formed.

The reaction of step a) is usually finished when a complete phase separation is formed, generally when a liquid/liquid phase boundary of two essentially clear phases is formed. The upper phase is enriched with the fatty acid C₁-C₄-alkyl esters and the lower phase is enriched with glycerol.

The reaction time of step a) usually varies with the production capacity.

The process of step a) may be preferably a batch process.

The reaction of step a) may be conducted in a vessel of any design suitable for a transesterification reaction including the phase separation. For example, the vessel may be designed such that the two phases may be extracted through two outlets mounted at different locations. The removal of the ester phase may be close to the filling level.

Typically, step b) of the instant process contains a separation step of the resulting phases formed in step a) and an isolation step of the fatty acid C₁-C₄-alkyl esters from the separated ester phase.

Accordingly, in a preferred aspect, the invention relates to a process for producing fatty acid C₁-C₄-alkyl esters from an organic oil source, wherein step b) comprises the following steps:
b1) separating the ester phase from the glycerol phase, and
b2) isolating the fatty acid C₁-C₄-alkyl esters from the ester phase.

Step b) may be carried out at the same temperature as applied in step a) or may be carried out at a lower temperature. The temperature may be suitably selected in order to prevent any precipitation of optional formed soaps, preferably the temperature is higher than room temperature (20-25°C), more preferably ≥ 30°C.

Step b) may include one or more separation steps b1).

The phase enriched with fatty acid C₁-C₄-alkyl esters may be separated from the phase enriched with glycerol by usually means, for example, by extracting said phase from the reactor, by decanting, by centrifugation or by withdrawing the phase enriched with glycerol at a lower level, usually close to the bottom of a reactor, preferably at the bottom of a reactor.

The separated phase enriched with fatty acid C₁-C₄-alkyl esters may be processed in a conventional way to isolate fatty acid C₁-C₄-alkyl esters, preferably in purified form for use as biodiesel meeting the commercial product specifications, especially fulfilling the requirements of DIN EN 14214 (2019) and ASTM D 6751.

The separated phase enriched with fatty acid C₁-C₄-alkyl esters usually contains impurities, like residual alcohol, glycerol, small amounts of catalyst, salts and soaps, and is generally purified in one or more steps. The order and number of these steps may vary depending on the properties of the organic oil source, the pretreatment process, the transesterification step and the economic feasibility.

For example, the separated phase containing the fatty C₁-C₄-alkyl esters may be subjected to at least one step selected from washing with water, preferably deionized water, and/or treating with acid, for example sulfuric acid, distillation, fractionation, drying under vacuum, filtering and any combination thereof.

The instant alkaline catalyst may be effectively used as transesterification catalyst, especially for improving the conversion in the process of producing fatty acid C₁-C₄-alkyl esters, preferably in the process of producing a biofuel, especially biodiesel.

Accordingly, in a further aspect the invention relates to the use of a mixture of metal alkoxides, as defined in any aspect herein, as a transesterification catalyst for increasing the conversion in the process of producing fatty acid C₁-C₄-alkyl esters, preferably in the process of producing a biofuel, especially biodiesel, wherein the oil source is an organic oil source which contains a triglyceride and a free fatty acid in an amount of at least 0.2 wt%, based on the total weight of the organic oil source.

A further aspect of the invention relates to a process for increasing the conversion in the process of producing fatty acid C₁-C₄-alkyl esters, preferably in the process of producing a biofuel, especially biodiesel, wherein a mixture of metal alkoxides, as defined in any aspect herein, is applied as a transesterification catalyst.

Preferably, the term "increasing the conversion" means that the conversion is higher if compared to a theoretical value, based on a linear relationship of the alkaline catalyst (mixture of NaOMe and KOMe) to the pure catalysts (NaOMe or KOMe).

Fatty acid alkyl esters may be used in many industrial applications, for example, in the fuel industry.

Accordingly, in a further aspect, the invention relates to a process for producing a biofuel, preferably biodiesel, comprising a process for producing fatty acid C₁-C₄-alkyl esters, as defined above.

The term "biofuel", as used herein, refers to fuel derived from biological source. Non-limiting examples include biodiesel, jet fuel, diesel, jet fuel blend stock and diesel blend stock.

The term "biodiesel", as used herein, means a biofuel that can be a substitute of diesel, which is derived from petroleum. Biodiesel may be used in combustion diesel engines in either a pure form, which is referred to as "neat" biodiesel, or as a blend in any concentration with petroleum-based diesel.

As the instant alkaline catalyst is able to perform effectively, the instant process enables the use of a wide range of oil- or fat-containing feedstocks for preparing fatty acid alkyl esters, including low-quality, cheap feedstocks containing a lower amount of free fatty acids, for example used cooking oil.

The instant process may be performed in a more economic manner, since the alkaline catalyst provides less costs, compared to pure KOMe, but performs similar and better than expected, when a linear relationship of the alkaline catalyst to the pure catalysts is taken as a basis. Every percent relates to a higher yield, which is important for a process on an industrial scale. Further, the instant alkaline catalyst may be used at a lower temperature than sodium methoxide.

The alkaline catalyst is easy to be handled as a liquid catalyst.

Compared to the use of pure sodium-containing catalysts, the instant catalyst allows for easier separation of formed salts, as potassium salts are more soluble than sodium salts.

After the transesterification of step a) the phase separation may be easily carried out as there is sufficient density difference between the fatty acid alkyl ester phase and the glycerol/alkanol phase.

Preferably, the biodiesel obtained by the instant process fulfills the requirements of DIN EN 14214 (2019) and ASTM D 6751.

The preferences for the process for producing fatty acid C₁-C₄-alkyl esters from an organic oil source applies to the other objects of the invention as well.

All percent, ppm or comparable values refer to the weight with respect to the total weight of the respective composition except where otherwise indicated. The terms "% by weight" and "wt%" are used herein synonymously. All cited documents are incorporated herein by reference.

The following examples shall further illustrate the present invention without restricting the scope of this invention.

### Examples

### Examples 1 to 4 and Comparative Examples 1 to 6

Used cooking oil: vegetable feedstock
Acid value of < 0.03 mg KOH/g
Water content < 200 ppm
Triglyceride content > 98 wt%

Analysis of the conversion: The upper phase obtained in the transesterification step was separated and analysed by IR and NMR. The analysis *via* IR is performed in accordance with the method described in C. Baroi et al, Int. J. Chem. React. Eng. 2009, 7, A72.

| | |
|---|---|
| IR | Perkin-Elmer Spectrum Two, MIRacle ATR |
| NMR | Bruker Avance DRX 500 |

### Example 1

A mixture of used cooking oil (170 g), oleic acid (1.7 g) and MeOH (20.4 g) was stirred (500 rpm) for 60 min and kept at 50°C. A premixed solution of NaOMe and KOMe (2.21 g of NaOMe, 30 wt% solution in MeOH and 2.68 g of KOMe, 32 wt% solution in MeOH; 50 : 50 molar ratio) was added in one portion, and stirring was stopped immediately. The reaction mixture was kept at 50°C for the indicated time.

### Example 2

A mixture of used cooking oil (170 g), oleic acid (1.7 g) and MeOH (20.4 g) was stirred (500 rpm) for 60 min and kept at 50°C. A premixed solution of NaOMe and KOMe (4 g of NaOMe, 30 wt% solution in MeOH and 0.54 g of KOMe, 32 wt% solution in MeOH; 90 : 10 molar ratio) was added in one portion, and stirring was stopped immediately. The reaction mixture was kept at 50°C for the indicated time.

### Example 3

A mixture of used cooking oil (170 g), oleic acid (1.7 g) and MeOH (20.4 g) was stirred (500 rpm) for 60 min and kept at 50°C. A premixed solution of NaOMe and KOMe (3.54 g of NaOMe, 30 wt% solution in MeOH and 1.07 g of KOMe, 32 wt% solution in MeOH; 80 : 20 molar ratio) was added in one portion, and stirring was stopped immediately. The reaction mixture was kept at 50°C for the indicated time.

### Example 4

A mixture of used cooking oil (170 g), oleic acid (3.4 g) and MeOH (20.4 g) was stirred (500 rpm) for 60 min and kept at 50°C. A premixed solution of NaOMe and KOMe (2.21 g of NaOMe, 30 wt% solution in MeOH and 2.68 g of KOMe, 32 wt% solution in MeOH; 50 : 50 molar ratio) was added in one portion, and stirring was stopped immediately. The reaction mixture was kept at 50°C for the indicated time.

### Comparative Example 1

A mixture of used cooking oil (170 g), oleic acid (1.7 g) and MeOH (20.4 g) was stirred (500 rpm) for 60 min and kept at 50°C. KOMe (5.36 g, 32 wt% solution in MeOH) was added in one portion, and stirring was stopped immediately. The reaction mixture was kept at 50°C for the indicated time.

### Comparative Example 2

A mixture of used cooking oil (170 g), oleic acid (1.7 g) and MeOH (20.4 g) was stirred (500 rpm) and kept at 50°C. NaOMe (4.42 g, 30 wt% solution in MeOH) was added in one portion, and stirring was stopped immediately. The reaction mixture was kept at 50°C for the indicated time.

### Comparative Example 3

A mixture of used cooking oil (170 g), oleic acid (3.4 g) and MeOH (20.4 g) was stirred (500 rpm) for 60 min and kept at 50°C. KOMe (5.36 g, 32 wt% solution in MeOH) was added in one portion, and stirring was stopped immediately. The reaction mixture was kept at 50°C for the indicated time.

### Comparative Example 4

A mixture of used cooking oil (170 g), oleic acid (1.7 g) and MeOH (24 g) was stirred (500 rpm) for 60 min and kept at 50°C. NaOMe (4.4 g, 30 wt% solution in MeOH) was added in one portion, and stirring was stopped immediately. The reaction mixture was kept at 50°C for the indicated time. A precipitate of soaps was formed.

### Comparative Example 5

A mixture of used cooking oil (170 g) and MeOH (20.4 g) was stirred (500 rpm) for 60 min and kept at 50°C. KOMe (5.36 g, 32 wt% solution in MeOH) was added in one portion, and stirring was stopped immediately. The reaction mixture was kept at 50°C for the indicated time.

### Comparative Example 6

A mixture of used cooking oil (170 g) and MeOH (20.4 g) was stirred (500 rpm) and kept at 50°C. NaOMe (4.42 g, 30 wt% solution in MeOH) was added in one portion, and stirring was stopped immediately. The reaction mixture was kept at 50°C for the indicated time.

The conversion of the Examples 1 to 4 and Comparative Examples 1 to 6 after predetermined periods of time are listed in Table 1. Each value of the conversion has a variance of about ± 0.5%.

**Table 1**

| | Conversion [%] | | | |
|---|---|---|---|---|
| | 0 min | 2 min | 4 min | 60 min |
| Ex 1 | 22 | 90 | 92 | 96 |
| Ex 2 | 19 | 75 | 85 | 94 |
| Ex 3 | 16 | 75 | 85 | 94 |
| Ex 4 | 12 | 65 | 79 | 92 |
| | | | | |
| Comp. Ex. 1 | 20 | 91 | 92 | 96 |
| Comp. Ex. 2 | 4 | 65 | 80 | 92 |
| Comp. Ex. 3 | 7 | 80 | 86 | 92 |
| Comp. Ex. 4 | 20 | 21 | 19 | 34 |
| Comp. Ex. 5 | 20 | 93 | 93 | 95 |
| Comp. Ex. 6 | 20 | 87 | 88 | 95 |

The conversion of the alkaline catalyst (mixture of NaOMe and KOMe) is in each ratio better than expected, when a linear relationship of the alkaline catalyst to the pure catalysts is taken as a basis. For example, the expected value for Example 1 is 94%.

### Examples 5 to 8 and Comparative Examples 7 to 10

Vegetable oil: refined rape seed oil
Acid value of 0.23 mg KOH/g
Water content: 830 ppm
Triglyceride content: 97 wt%

Analysis of the conversion: A sample of the reaction mixture was taken after 60 min of reaction (stirring time) and quenched by addition of aqueous citric acid solution (10 wt%). After centrifugation (3500 rpm), the upper layer was separated and analyzed by GC. The analysis *via* GC was performed according to DIN EN 14105 (2020).

The soap content in FAME was determined *via* titration in accordance with the method described in J. Van Gerpen et al., Biodiesel Analytical Methods August 2002-January 2004, NREL/SR-510-36240, 2004.

Gas chromatography (GC): Agilent GC6890N or GC7890A equipped with an Agilent PTV SPTM Gang FTG (15 m, 0.32 mm ID, 0.1 µm) or a MXT Biodiesel TG Kap 15 (15 m, 0.32 mm ID, 0.1 µm) column.

### Example 5

A mixture of vegetable oil (303.8 g) containing 5 wt% oleic acid and MeOH (43.3 g) was stirred (800 rpm) and heated to 60°C. A solution of the alkaline catalyst (KOMe : NaOMe 1:1 molar ratio, 16.6 g of 31 wt% solution in MeOH) was added in one portion, and stirring was continued for 60 min. The reaction mixture was transferred into a separation funnel and kept at 40°C for 120 min. A sample of the upper layer was taken after said time for soap analysis.

### Example 6

A mixture of vegetable oil (310.3 g) containing 5 wt% oleic acid and MeOH (43.7 g) was stirred (800 rpm) and heated to 60°C. A solution of the alkaline catalyst (KOMe : NaOMe 3:1 molar ratio, 17.7 g of 31.5 wt% solution in MeOH) was added in one portion, and stirring was continued for 60 min. The reaction mixture was transferred into a separation funnel and kept at 40°C for 120 min. A sample of the upper layer was taken after said time for soap analysis.

### Example 7

A mixture of vegetable oil (306.6 g) containing 5 wt% oleic acid and MeOH (43.8 g) was stirred (800 rpm) and heated to 50°C. A solution of the alkaline catalyst (KOMe : NaOMe 1:1 molar ratio, 16.8 g of 31 wt% solution in MeOH) was added in one portion, and stirring was continued for 60 min. The reaction mixture was transferred into a separation funnel and kept at 40°C for 120 min. A sample of the upper layer was taken after said time for soap analysis.

### Example 8

A mixture of vegetable oil (302.6 g) containing 5 wt% oleic acid and MeOH (42.6 g) was stirred (800 rpm) and heated to 50°C. A solution of the alkaline catalyst (KOMe : NaOMe 3:1 molar ratio, 17.3 g of 31.5 wt% solution in MeOH) was added in one portion, and stirring was continued for 60 min. The reaction mixture was transferred into a separation funnel and kept at 40°C for 120 min. A sample of the upper layer was taken after said time for soap analysis.

### Comparative Example 7

A mixture of vegetable oil (303.9 g) containing 5 wt% oleic acid and MeOH (42.3 g) was stirred (800 rpm) and heated to 60°C. A solution of KOMe (18.2 g of 32 wt% solution in MeOH) was added in one portion, and stirring was continued for 60 min. The reaction mixture was transferred into a separation funnel and kept at 40°C for 120 min. A sample of the upper layer was taken after said time for soap analysis.

### Comparative Example 8

A mixture of vegetable oil (309.6 g) containing 5 wt% oleic acid and MeOH (45.1 g) was stirred (800 rpm) and heated to 60°C. A solution of NaOMe (15.2 g of 30 wt% solution in MeOH) was added in one portion, and stirring was continued for 60 min. The reaction mixture was transferred into a separation funnel and kept at 40°C for 120 min. A sample of the upper layer was taken after said time for soap analysis.

### Comparative Example 9

A mixture of vegetable oil (301.0 g) containing 5 wt% oleic acid and MeOH (52.0 g) was stirred (800 rpm) and heated to 50°C. A solution of KOMe (18.1 g of 32 wt% solution in MeOH) was added in one portion, and stirring was continued for 60 min. The reaction mixture was transferred into a separation funnel and kept at 40°C for 120 min. A sample of the upper layer was taken after said time for soap analysis.

### Comparative Example 10

A mixture of vegetable oil (303.2 g) containing 5 wt% oleic acid and MeOH (44.1 g) was stirred (800 rpm) and heated to 50°C. A solution of NaOMe (14.8 g of 30 wt% solution in MeOH) was added in one portion, and stirring was continued for 60 min. The reaction mixture was transferred into a separation funnel and kept at 40°C for 120 min. A sample of the upper layer was taken after said time for soap analysis.

Conversion after 60 min of stirring and soap content in FAME after 120 min of settlement for the Examples 5 to 8 and Comparative Examples 7 to 10 are listed in Table 2.

**Table 2**

| | T [°C] | Conversion [%] | Soap [ppm] |
|---|---|---|---|
| Ex. 5 | 60 | 98.5 | 1496 |
| Ex. 6 | 60 | 99.5 | 1340 |
| Ex. 7 | 50 | 97.4 | 1327 |
| Ex. 8 | 50 | 97.7 | 2956 |
| | | | |
| Comp. Ex. 7 | 60 | 98.6 | 1560 |
| Comp. Ex**.** 8^{a} | 60 | 97.9 | 6116 |
| Comp. Ex. 9 | 50 | 97.5 | 3167 |
| Comp. Ex. 10 | 50 | 97.0 | 3571 |

| | | | |
|---|---|---|---|
| ^{a}glycerol layer solidified at 40°C during settlement. | | | |

The conversion rate of the alkaline catalyst (mixture of NaOMe and KOMe) is in each ratio better than the expected result assuming a linear relationship between the alkaline catalyst and the pure catalysts. For example, the expected conversion for Examples 5 and 6 would be 98.3% and 98.4%, respectively.

For transesterification reactions with a FFA content of 5 wt%, reduced soap content in FAME after settlement was achieved with the alkaline catalyst compared to the pure catalysts.

In the Examples 5 to 8 with a FFA content of 5 wt%, the alkaline catalyst is partly used for neutralization. Therefore, enhanced catalyst concentration was added to account for the neutralized alkoxide. The active catalyst concentration after neutralization was below 5 wt%.

## Claims

1. A process for producing fatty acid C₁-C₄-alkyl esters from an organic oil source, wherein the oil source contains a triglyceride and a free fatty acid in an amount of at least 0.2 wt%, based on the total weight of the organic oil source, the process comprising
a) reacting the organic oil source with a C₁-C₄-alkanol in the presence of an alkaline catalyst to form an ester phase and a glycerol phase; and
b) isolating the fatty acid C₁-C₄-alkyl esters from the ester phase;
wherein the alkaline catalyst is a mixture of metal alkoxides, and
the mixture of metal alkoxides is a mixture of alkali metal alkoxides.

2. The process according to claim 1, wherein the C₁-C₄-alkanol is methanol, ethanol or a mixture thereof, preferably methanol.

3. The process according to claim 1 or claim 2, wherein the mixture of alkali metal alkoxides is a mixture of NaOMe and KOMe.

4. The process according to claim 3, wherein the molar ratio of NaOMe : KOMe in the mixture of alkali metal alkoxides is of from 0.01 : 0.99 to 0.99 : 0.01, preferably 0.05 : 0.95 to 0.95 : 0.05.

5. The process according to any one of the preceding claims, wherein the alkaline catalyst is used as a solution in C₁-C₄-alkanol, preferably methanol, ethanol or a mixture thereof.

6. The process according to any one of the preceding claims, wherein the alkaline catalyst is used as a solution in C₁-C₄-alkanol having a concentration of from 1 to 50 wt%, based on the total weight of the solution, preferably as a solution in methanol, more preferably as a solution in anhydrous methanol.

7. The process according to any one of the preceding claims, wherein the alkaline catalyst is used in an amount of from 0.1 to 8 wt%, based on the total weight of the triglyceride.

8. The process according to any one of the preceding claims, wherein the molar ratio of the C₁-C₄-alkanol to the triglyceride of the organic oil source is of from 3 : 1 to 20 : 1, preferably 4 : 1 to 15 : 1.

9. The process according to any one of the preceding claims, wherein the amount of the free fatty acid is at least 0.3 wt%, based on the total weight of the organic oil source, preferably of from 0.5 to 10 wt%, especially from 0.5 to 8 wt%, in particular from 0.5 to 5 wt%.

10. The process according to any one of the preceding claims, wherein the organic oil source is from a natural or synthetic oil and/or fat, preferably derived from a vegetable oil.

11. The process according to any one of the preceding claims, wherein the organic oil source is from used vegetable and/or animal oil and/or fat, by-products of the chemical and physical refining of vegetable and/or animal oil and/or fat, by-products of the refining of glycerol from biodiesel, fatty acids from distillation and non-distillation, trap grease, hydrolytically cleaved fatty substances and distilled and non-distilled fatty acids resulting from the cleaving of soap or mixtures thereof.

12. The process according to any one of the preceding claims, wherein the organic oil source is from used vegetable oil or by-products of the chemical and physical refining of vegetable oil.

13. The process according to claim 10 or 12, wherein the vegetable oil is an oil selected from coconut oil, corn oil, cottonseed oil, jatropha oil, olive oil, palm oil, peanut oil, rapeseed oil, safflower oil, sesame oil, soybean oil, sunflower oil and any combination thereof.

14. The process according to any one of the preceding claims, wherein the free fatty acid is at least one fatty acid selected from caprylic acid, capric acid, lauric acid, myristic acid, palmitic acid, stearic acid, arachidic acid, behenic acid, lignoceric acid, cerotic acid, myristoleic acid, palmitoleic acid, oleic acid, elaidic acid, vaccenic acid, linoleic acid, linolelaidic acid, linolenic acid, arachidonic acid, eicosapentaenoic acid, erucic acid and docosahexaenoic acid, preferably the free fatty acid is selected from oleic oil, palmitic acid, linoleic acid, lauric acid or any combination thereof.

15. The process according to any one of the preceding claims, wherein the organic oil source is subjected prior to step a) to at least one step selected from degumming, bleaching, drying and filtering.

16. The process according to any one of the preceding claims, wherein step a) comprises the following steps:
a1) adding the organic oil source, the C₁-C₄-alkanol and the alkaline catalyst to a vessel,
a2) mixing the organic oil source, the C₁-C₄-alkanol and the alkaline catalyst, and
a3) allowing the mixture, obtained in step a1) and step a2), to react.

17. The process according to claim 16, wherein step a3) comprises allowing the mixture, obtained in step a1) and step a2), to react under essentially static reaction conditions.

18. The process according to claim 16, wherein steps a2) and a3) are carried out under mechanical agitation, followed by forming the ester phase and the glycerol phase.

19. The process according to any one of the preceding claims, wherein step a) is carried out at a temperature of from 20 to 100°C, preferably 30 to 80°C, and at a pressure of from 1 to 10 bar, preferably 1 to 3 bar.

20. The process according to any one of the preceding claims, wherein step b) comprises the following steps:
b1) separating the ester phase from the glycerol phase, and
b2) isolating the fatty acid C₁-C₄-alkyl esters from the ester phase.

21. The use of a mixture of alkali metal alkoxides, as defined in any one of claims 1, 3, 4, 5, and 6, as a transesterification catalyst for increasing the conversion in the process of producing fatty acid C₁-C₄-alkyl esters from an organic oil source, wherein the oil source contains a triglyceride and a free fatty acid in an amount of at least 0.2 wt%, based on the total weight of the organic oil source, preferably in the process of producing a biofuel, especially biodiesel.

22. A process for producing a biofuel, preferably biodiesel, comprising a process for producing fatty acid C₁-C₄-alkyl esters, as defined in any of claims 1 to 20.

## Patentansprüche

1. Verfahren zur Herstellung von Fettsäure-C₁-C₄-Alkylestern aus einer organischen Ölquelle, wobei die Ölquelle ein Triglycerid und eine freie Fettsäure in einer Menge von mindestens 0,2 Gew.-%, bezogen auf das Gesamtgewicht der organischen Ölquelle, enthält, wobei das Verfahren umfasst:
a) die Umsetzung der organischen Ölquelle mit einem C₁-C₄-Alkanol in Gegenwart eines alkalischen Katalysators unter Bildung einer Esterphase und einer Glycerinphase; und
b) die Isolierung der Fettsäure-C₁-C₄-Alkylester aus der Esterphase;
wobei der alkalische Katalysator ein Gemisch aus Metallalkoxiden ist, und
das Gemisch von Metallalkoxiden ein Gemisch von Alkalimetallalkoxiden ist.

2. Verfahren nach Anspruch 1, wobei das C₁-C₄-Alkanol Methanol, Ethanol oder ein Gemisch davon ist, vorzugsweise Methanol.

3. Verfahren nach Anspruch 1 oder Anspruch 2, wobei das Gemisch von Alkalimetallalkoxiden ein Gemisch aus NaOMe und KOMe ist.

4. Verfahren nach Anspruch 3, wobei das Molverhältnis von NaOMe : KOMe in dem Gemisch von Alkalimetallalkoxiden im Bereich von 0,01 : 0,99 bis 0,99 : 0,01, vorzugsweise von 0,05 : 0,95 bis 0,95 : 0,05, liegt.

5. Verfahren nach einem der vorhergehenden Ansprüche, wobei der alkalische Katalysator als Lösung in einem C₁-C₄-Alkanol, vorzugsweise Methanol, Ethanol oder einem Gemisch davon, verwendet wird.

6. Verfahren nach einem der vorhergehenden Ansprüche, wobei der alkalische Katalysator als Lösung in einem C₁-C₄-Alkanol mit einer Konzentration von 1 bis 50 Gew.-%, bezogen auf das Gesamtgewicht der Lösung, verwendet wird, vorzugsweise als Lösung in Methanol, besonders bevorzugt als Lösung in wasserfreiem Methanol.

7. Verfahren nach einem der vorhergehenden Ansprüche, wobei der alkalische Katalysator in einer Menge von 0,1 bis 8 Gew.-%, bezogen auf das Gesamtgewicht des Triglycerids, verwendet wird.

8. Verfahren nach einem der vorhergehenden Ansprüche, wobei das Molverhältnis des C₁-C₄-Alkanols zu dem Triglycerid der organischen Ölquelle 3 : 1 bis 20 : 1, vorzugsweise von 4 : 1 bis 15 : 1, beträgt.

9. Verfahren nach einem der vorhergehenden Ansprüche, wobei die Menge der freien Fettsäure mindestens 0,3 Gew.-%, bezogen auf das Gesamtgewicht der organischen Ölquelle, beträgt, vorzugsweise 0,5 bis 10 Gew.-%, besonders bevozugt 0,5 bis 8 Gew.-%, insbesondere 0,5 bis 5 Gew.-%.

10. Verfahren nach einem der vorhergehenden Ansprüche, wobei die organische Ölquelle aus natürlichem oder synthetischem Öl und/oder Fett stammt, vorzugsweise aus einem pflanzlichen Öl gewonnen.

11. Verfahren nach einem der vorhergehenden Ansprüche, wobei die organische Ölquelle aus gebrauchtem pflanzlichem und/oder tierischem Öl und/oder Fett, Nebenprodukten der chemischen und physikalischen Raffination von pflanzlichem und/oder tierischem Öl und/oder Fett, Nebenprodukten der Raffination von Glycerin aus Biodiesel, destillierten und nicht destillierten Fettsäuren, Fettabscheider-Fett, hydrolytisch gespaltenen Fettstoffen sowie destillierten und nicht destillierten Fettsäuren, die bei der Spaltung von Seife oder Gemischen davon anfallen, stammt.

12. Verfahren nach einem der vorhergehenden Ansprüche, wobei die organische Ölquelle aus gebrauchtem pflanzlichem Öl oder aus Nebenprodukten der chemischen und physikalischen Raffination von pflanzlichem Öl stammt.

13. Verfahren nach Anspruch 10 oder 12, wobei das pflanzliche Öl ein Öl ist, ausgewählt aus Kokosnussöl, Maisöl, Baumwollsamenöl, Jatrophaöl, Olivenöl, Palmöl, Erdnussöl, Rapsöl, Distelöl, Sesamöl, Sojaöl, Sonnenblumenöl und einer beliebigen Kombination davon.

14. Verfahren nach einem der vorhergehenden Ansprüche, wobei die freie Fettsäure mindestens eine Fettsäure ist, ausgewählt aus Caprylsäure, Caprinsäure, Laurinsäure, Myristinsäure, Palmitinsäure, Stearinsäure, Arachinsäure, Behensäure, Lignocerinsäure, Cerotinsäure, Myristoleinsäure, Palmitoleinsäure, Ölsäure, Elaidinsäure, Vaccensäure, Linolsäure, Linolelaidinsäure, Linolensäure, Arachidonsäure, Eicosapentaensäure, Erucasäure und Docosahexaensäure, vorzugsweise aus Ölsäure, Palmitinsäure, Linolsäure, Laurinsäure oder einer beliebigen Kombination davon.

15. Verfahren nach einem der vorhergehenden Ansprüche, wobei die organische Ölquelle vor Schritt a) mindestens einem Schritt unterzogen wird, ausgewählt aus Entschleimung, Bleichung, Trocknung und Filtration.

16. Verfahren nach einem der vorhergehenden Ansprüche, wobei Schritt a) die folgenden Schritte umfasst:
a1) Zugeben der organischen Ölquelle, des C₁-C₄-Alkanols und des alkalischen Katalysators in ein Gefäß,
a2) Mischen der organischen Ölquelle, des C₁-C₄-Alkanols und des alkalischen Katalysators, und
a3) Umsetzenlassen des in Schritt a1) und Schritt a2) erhaltenen Gemisches.

17. Verfahren nach Anspruch 16, wobei Schritt a3) das Umsetzenlassen des in Schritt a1) und Schritt a2) erhaltenen Gemisches unter im Wesentlichen statischen Reaktionsbedingungen umfasst.

18. Verfahren nach Anspruch 16, wobei die Schritte a2) und a3) unter mechanischem Rühren durchgeführt werden, gefolgt von der Bildung der Esterphase und der Glycerinphase.

19. Verfahren nach einem der vorhergehenden Ansprüche, wobei Schritt a) bei einer Temperatur von 20 bis 100°C, vorzugsweise 30 bis 80°C, und bei einem Druck von 1 bis 10 bar, vorzugsweise 1 bis 3 bar, durchgeführt wird.

20. Verfahren nach einem der vorhergehenden Ansprüche, wobei Schritt b) die folgenden Schritte umfasst:
b1) Abtrennen der Esterphase von der Glycerinphase, und
b2) Isolieren der Fettsäure-C₁-C₄-alkylester aus der Esterphase.

21. Verwendung eines Gemischs von Alkalimetallalkoxiden, wie in einem der Ansprüche 1, 3, 4, 5 und 6 definiert, als Umesterungskatalysator zur Erhöhung des Umsatzes bei dem Verfahren zur Herstellung von Fettsäure-C₁-C₄-Alkylestern aus einer organischen Ölquelle, wobei die Ölquelle ein Triglycerid und eine freie Fettsäure in einer Menge von mindestens 0,2 Gew.-%, bezogen auf das Gesamtgewicht der organischen Ölquelle, enthält, vorzugsweise bei dem Verfahren zur Herstellung eines Biokraftstoffs, insbesondere Biodiesel.

22. Verfahren zur Herstellung eines Biokraftstoffs, vorzugsweise Biodiesel, umfassend ein Verfahren zur Herstellung von Fettsäure-C₁-C₄-Alkylestern, wie in einem der Ansprüche 1 bis 20 definiert.

## Revendications

1. Un procédé de production d'esters alkyliques en C₁-C₄ d'acides gras à partir d'une source d'huile organique, dans lequel la source d'huile contient un triglycéride et un acide gras libre en une quantité d'au moins 0,2% en poids, par rapport au poids total de la source d'huile organique, le procédé comprenant:
a) la réaction de la source d'huile organique avec un alcanol en C₁-C₄ en présence d'un catalyseur alcalin pour former une phase ester et une phase glycérol; et
b) l'isolement des esters alkyliques en C₁-C₄ d'acides gras à partir de la phase ester;
dans lequel le catalyseur alcalin est un mélange d'alcoxydes métalliques, et
le mélange d'alcoxydes métalliques est un mélange d'alcoxydes de métaux alcalins.

2. Le procédé selon la revendication 1, dans lequel l'alcanol en C₁-C₄ est le méthanol, l'éthanol ou un mélange de ceux-ci, de préférence le méthanol.

3. Le procédé selon la revendication 1 ou la revendication 2, dans lequel le mélange d'alcoxydes de métaux alcalins est un mélange de NaOMe et de KOMe.

4. Le procédé selon la revendication 3, dans lequel le rapport molaire NaOMe : KOMe dans le mélange d'alcoxydes de métaux alcalins est de 0,01 : 0,99 et 0,99 : 0,01, de préférence entre 0,05 : 0,95 et 0,95 : 0,05.

5. Le procédé selon l'une quelconque des revendications précédentes, dans lequel le catalyseur alcalin est utilisé sous la forme d'une solution dans un alcanol en C₁-C₄, de préférence le méthanol, l'éthanol ou un mélange de ceux-ci.

6. Le procédé selon l'une quelconque des revendications précédentes, dans lequel le catalyseur alcalin est utilisé sous la forme d'une solution dans un alcanol en C₁-C₄ ayant une concentration de 1 à 50% en poids, par rapport au poids total de la solution, de préférence sous la forme d'une solution dans le méthanol, plus préférablement sous la forme d'une solution dans du méthanol anhydre.

7. Le procédé selon l'une quelconque des revendications précédentes, dans lequel le catalyseur alcalin est utilisé en une quantité de 0,1 à 8% en poids, par rapport au poids total du triglycéride.

8. Le procédé selon l'une quelconque des revendications précédentes, dans lequel le rapport molaire de l'alcanol en C₁-C₄ au triglycéride de la source d'huile organique est de 3 : 1 et 20 : 1, de préférence entre 4 : 1 et 15 : 1.

9. Le procédé selon l'une quelconque des revendications précédentes, dans lequel la quantité d'acide gras libre est d'au moins 0,3% en poids, par rapport au poids total de la source d'huile organique, de préférence de 0,5 à 10% en poids, en particulier de 0,5 à 8% en poids, notamment de 0,5 à 5% en poids.

10. Le procédé selon l'une quelconque des revendications précédentes, dans lequel la source d'huile organique provient d'une huile et/ou d'une graisse naturelle ou synthétique, de préférence dérivée d'une huile végétale.

11. Le procédé selon l'une quelconque des revendications précédentes, dans lequel la source d'huile organique provient d'huile et/ou de graisse végétale et/ou animale usagée, de sous-produits du raffinage chimique et physique d'huile et/ou de graisse végétale et/ou animale, de sous-produits du raffinage du glycérol issu du biodiesel, d'acides gras issus de la distillation et de la non-distillation, de graisses de piégeage, de substances grasses clivées par hydrolyse et d'acides gras issus de la distillation et de la non-distillation résultant du clivage du savon, ou de mélanges de ceux-ci.

12. Le procédé selon l'une quelconque des revendications précédentes, dans lequel la source d'huile organique provient d'une huile végétale usagée ou de sous-produits du raffinage chimique et physique d'une huile végétale.

13. Le procédé selon la revendication 10 ou 12, dans lequel l'huile végétale est une huile choisie parmi l'huile de noix de coco, l'huile de maïs, l'huile de coton, l'huile de jatropha, l'huile d'olive, l'huile de palme, l'huile d'arachide, l'huile de colza, l'huile de carthame, l'huile de sésame, l'huile de soja, l'huile de tournesol et toute combinaison de celles-ci.

14. Le procédé selon l'une quelconque des revendications précédentes, dans lequel l'acide gras libre est au moins un acide gras choisi parmi l'acide caprylique, l'acide caprique, l'acide laurique, l'acide myristique, l'acide palmitique, l'acide stéarique, l'acide arachidique, l'acide béhénique, l'acide lignocérique, l'acide cérotique, l'acide myristoléique, l'acide palmitoléique, l'acide oléique, l'acide élaïdique, l'acide vaccénique, l'acide linoléique, l'acide linolélaïdique, l'acide linolénique, l'acide arachidonique, l'acide eicosapentaénoïque, l'acide érucique et l'acide docosahexaénoïque, de préférence l'acide gras libre est choisi parmi l'acide oléique, l'acide palmitique, l'acide linoléique, l'acide laurique ou toute combinaison de ceux-ci.

15. Le procédé selon l'une quelconque des revendications précédentes, dans lequel la source d'huile organique est soumise, avant l'étape a), à au moins une étape choisie parmi le dégommage, le blanchiment, le séchage et la filtration.

16. Le procédé selon l'une quelconque des revendications précédentes, dans lequel l'étape a) comprend les étapes suivantes:
a1) ajouter la source d'huile organique, l'alcanol en C₁-C₄ et le catalyseur alcalin dans un récipient,
a2) mélanger la source d'huile organique, l'alcanol en C₁-C₄ et le catalyseur alcalin, et
a3) le fait de laisser réagir le mélange obtenu à l'étape a1) et à l'étape a2).

17. Le procédé selon la revendication 16, dans lequel l'étape a3) comprend le fait de laisser réagir le mélange obtenu à l'étape a1) et à l'étape a2) dans des conditions de réaction essentiellement statiques.

18. Le procédé selon la revendication 16, dans lequel les étapes a2) et a3) sont réalisées sous agitation mécanique, suivie de la formation de la phase ester et de la phase glycérol.

19. Le procédé selon l'une quelconque des revendications précédentes, dans lequel l'étape a) est réalisée à une température de 20 à 100°C, de préférence de 30 à 80°C, et à une pression de 1 à 10 bar, de préférence de 1 à 3 bar.

20. Le procédé selon l'une quelconque des revendications précédentes, dans lequel l'étape b) comprend les étapes suivantes:
b1) séparer la phase ester de la phase glycérol, et
b2) isoler les esters alkyliques en C₁-C₄ d'acides gras à partir de la phase ester.

21. L'utilisation d'un mélange d'alcoxydes de métaux alcalins, tel que défini dans l'une quelconque des revendications 1, 3, 4, 5 et 6, en tant que catalyseur de transestérification pour augmenter la conversion dans le procédé de production d'esters alkyliques en C₁-C₄ d'acides gras à partir d'une source d'huile organique, dans lequel la source d'huile contient un triglycéride et un acide gras libre en une quantité d'au moins 0,2% en poids, par rapport au poids total de la source d'huile organique, de préférence dans le procédé de production d'un biocarburant, en particulier du biodiesel.

22. Un procédé de production d'un biocarburant, de préférence du biodiesel, comprenant un procédé de production d'esters alkyliques en C₁-C₄ d'acides gras, tel que défini dans l'une quelconque des revendications 1 à 20.
